# EUROPEAN PATENT APPLICATION

(11) **EP 4 685 984 A1**
(43) Date of publication of application: **28.01.2026**
(21) Application number: 24878797.0
(22) Date of filing: 23.09.2024
(51) Int. Cl.: H01M 50/531, H01M 50/543

(54) **BATTERY CELL, BATTERY, AND ELECTRIC DEVICE**

(30) Priority: 18.10.2023 CN 202322799297 U
(71) Applicant: Contemporary Amperex Technology Co., Limited, Ningde, Fujian 352100 (CN)
(72) Inventor: LIN, Denghua, Ningde, Fujian 352100 (CN); CAO, Mengkai, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Kraus & Lederer PartGmbB
(86) International application number: PCT/CN2024/120450
(87) International publication number: WO 2025/082149

(57) **Abstract**

A battery cell (100), a battery (200), and an electric device are provided. The battery cell (100) includes a housing (10), an electrode assembly (20), and an electrode terminal (30), where the housing (10) includes a first wall (110); the electrode assembly (20) is disposed in the housing (10), and the electrode assembly (20) includes a main body (21) and a tab (22) connected to the main body (21); the electrode terminal (30) is disposed on the first wall (110); the electrode terminal (30) includes a bottom surface (301) and a side surface (302) connected to the bottom surface (301); the bottom surface (301) faces the main body (21); and the side surface (302) is connected to the tab (22).

## Description

### CROSS-REFERENCE TO RELATED APPLICATIONS

This application claims the priority and benefit of Chinese Patent Application No. 202322799297.X, filed with the China National Intellectual Property Administration on October 18, 2023, which is incorporated herein by reference in its entirety.

### TECHNICAL FIELD

This application relates to the field of battery technology, and in particular, to a battery cell, a battery, and an electric device.

### BACKGROUND

In related technologies, a battery cell usually includes an electrode assembly and an electrode terminal, where the electrode assembly includes a tab. To increase the energy density of the battery cell, an adapter is omitted in the battery cell, and the tab can be directly connected to the electrode terminal. In this regard, how to improve the structure of the battery cell to further enhance the energy density remains a technical problem to be solved.

### SUMMARY

In view of the above problem, this application provides a battery cell, a battery, and an electric device, which can further improve an energy density of the battery cell.

According to a first aspect, this application provides a battery cell, including a housing, an electrode assembly, and an electrode terminal, where
the housing includes a first wall;
the electrode assembly is disposed in the housing, and the electrode assembly includes a main body and a tab connected to the main body; and
the electrode terminal is disposed on the first wall, the electrode terminal includes a bottom surface and a side surface connected to the bottom surface, the bottom surface faces the main body, and the side surface is connected to the tab.

In the battery cell according to this embodiment of this application, the tab is connected to the side surface of the electrode terminal, reducing the distance between the bottom surface of the electrode terminal and the main body, thereby increasing a height of the main body without increasing an overall height space of the battery cell, and thus improving an energy density of the battery cell.

In some embodiments, the first wall includes a top cover.

In this way, the top cover can secure the electrode terminal to the first wall, and the electrical energy generated by the electrode assembly is conducted from the inside of the battery cell to an external circuit of the battery cell through the electrode terminal on the top cover.

In some embodiments, the electrode terminal includes a mounting portion and a connection portion connected to the mounting portion, the mounting portion is disposed on the first wall, the connection portion is located within the housing, the connection portion includes the bottom surface, the side surface, and a top surface opposite the bottom surface, an edge of the top surface and/or the bottom surface is provided with a protrusion, and the tab is connected to the side surface and the protrusion.

In this way, the tab is connected to the side surface and the protrusion, increasing a connection area between the tab and the electrode terminal, thereby improving the stability of the connection between the tab and the electrode terminal.

In some embodiments, the protrusion is provided on the top surface, and the protrusion is spaced apart from a surface of the first wall facing the main body.

In this way, the protrusion extends in a direction away from the main body, and does not occupy the height space of the main body, thereby improving the space utilization within the housing and increasing the energy density of the battery cell.

In some embodiments, a distance between the protrusion and the surface of the first wall facing the main body is greater than 0.05 mm and less than or equal to 2 mm.

In this way, the distance between the protrusion and the surface of the first wall facing the main body is greater than 0.05 mm, ensuring insulation strength between the electrode terminal and the top cover, and the distance between the protrusion and the surface of the first wall facing the main body is less than or equal to 2 mm, reducing the occupation of the internal space of the housing, helping to improve the energy density of the battery cell.

In some embodiments, the battery cell includes an insulating member disposed between the protrusion and the first wall.

In this way, the insulating member can enhance the insulation strength between the protrusion and the first wall, thereby improving insulation and isolation provided by the housing for the electrode assembly.

In some embodiments, the tab is partially attached to the insulating member.

In this way, the tab is partially attached to the insulating member, resulting in a large contact area between the tab and the insulating member, facilitating the dispersion of internal stress in the tab, thereby reducing a possibility that the tab cracks due to localized stress concentration.

In some embodiments, a surface of the insulating member attached to the tab is planar.

In this way, the contact surface where the tab is attached to the insulating member is planar, further reducing the possibility that the tab cracks due to localized stress.

In some embodiments, the protrusion is provided on the bottom surface, and along a direction from the top surface toward the bottom surface, a height of the protrusion is less than a thickness of the tab.

In this way, under a condition that the protrusion is disposed between the electrode terminal and the main body, the protrusion occupies a space smaller than a space occupied by the tab connected to the bottom surface, thereby improving the utilization of the internal space of the housing.

In some embodiments, the tab includes a free end away from the main body, the free end is connected to the side surface, and an end surface of the free end faces the main body or the first wall.

In this way, the free end of the tab away from the main body is connected to the electrode terminal, and another end is connected to the main body, allowing the tab to move freely to a certain degree between the two ends, thereby reducing pulling and lowering the possibility that the tab cracks due to stress.

In some embodiments, the end surface of the free end faces the main body, and an insulating structure is disposed between the main body and the end surface of the free end.

In this way, the insulating structure can provide insulation protection for the tab, preventing the free end from inserting into the main body, which causes short circuit in the electrode assembly.

In some embodiments, the insulating structure includes an insulating film attached to the main body and the tab.

In this way, the insulating film can adapt to tabs and main bodies of different shapes, providing effective insulation protection. In addition, the use of the lightweight insulating film helps to improve the energy density of the battery cell.

In some embodiments, the tab includes a free end away from the main body, the free end is connected to the side surface, and the free end is located on a side of the bottom surface away from the main body.

In this way, the free end of the tab is located on the side of the bottom surface away from the main body, ensuring that the free end of the tab does not occupy the height space of the main body, and improving the utilization of internal space of the housing, thereby increasing the energy density of the battery cell, keeping the free end of the tab away from the main body, and facilitating insulation protection between the free end and the main body.

In some embodiments, a corner of the electrode terminal close to the main body is formed with a passivation structure.

In this way, the passivation structure can prevent the corner of the electrode terminal from scratching the tab, reducing a possibility that the tab cracks due to scratches.

In some embodiments, along a direction from the main body toward the first wall, a height of the side surface ranges from 0.5 mm to 10 mm.

In this way, reasonably setting the height of the side surface can increase an area of the connection surface between the side surface and the tab, thereby improving stability of the connection between the tab and the side surface.

In some embodiments, a distance between the bottom surface and the main body is greater than 0.1 mm and less than or equal to 10 mm.

In this way, the distance between the bottom surface 301 and the main body 21 is greater than 0.1 mm, reducing a possibility that the bottom of the electrode terminal 30 damages the electrode assembly 20 during vibration or impact, thereby preventing decarbonization or lithium precipitation in the electrode assembly 20. Meanwhile, setting the distance between the bottom surface 301 and the main body 21 to be less than or equal to 10 mm can effectively utilize the internal space of the housing 10.

According to a second aspect, this application provides a battery, including the battery cell described above.

In the battery provided in this application, the connection structure between the electrode terminal and the tab in the battery cell is optimized, increasing the energy density of the battery.

According to a third aspect, this application provides an electric device, including the battery cell or the battery described above.

The electric device provided in this application, due to the increased energy density of the battery cell, can obtain greater electrical energy and save mounting space for the battery.

The above description is only an overview of the technical solutions of this application. To provide a clearer understanding of the technical means of this application and to enable implementation in accordance with the contents of the specification, and to make the above and other objectives, features, and advantages of this application more apparent and understandable, specific embodiments of this application are provided below.

### BRIEF DESCRIPTION OF DRAWINGS

Various other advantages and benefits will become apparent to those of ordinary skill in the art upon reading the detailed description of the preferred embodiments below. The drawings are provided solely for the purpose of illustrating the preferred embodiments and are not to be construed as limitations on this application. Throughout the drawings, the same reference signs denote the same components. In the drawings:
FIG. 1 is a schematic three-dimensional view of an electric device according to some embodiments of this application;
FIG. 2 is a schematic structural diagram of a battery according to some embodiments of this application;
FIG. 3 is a schematic structural diagram of a battery cell according to some embodiments of this application;
FIG. 4 is a schematic structural exploded view of the battery cell shown in FIG. 3;
FIG. 5 is a schematic structural view of the battery cell shown in FIG. 3 from a front perspective;
FIG. 6 is a schematic cross-sectional structural diagram of the battery cell shown in FIG. 5 along an A-A direction;
FIG. 7 is a schematic enlarged view of a structure at a portion B of the battery cell shown in FIG. 6;
FIG. 8 is a schematic enlarged view of a cross section of a portion of a battery cell according to another embodiment; and
FIG. 9 is a schematic enlarged view of a cross section of a portion of a battery cell according to still another embodiment.

Description of reference signs: vehicle 1000; battery 200; motor 300; controller 400; box 210; first portion 211; second portion 212; battery cell 100; housing 10; opening 101; first wall 110; top cover 111; through-hole 1101; electrode assembly 20; main body 21; tab 22; free end 221; electrode terminal 30; bottom surface 301; side surface 302; mounting portion 31; connection portion 32; top surface 303; protrusion 33; passivation structure 34; insulating member 40; insulating structure 50; and insulating film 51.

### DESCRIPTION OF EMBODIMENTS

The embodiments of the technical solutions of this application are described in detail below with reference to the accompanying drawings. The following embodiments are only used to illustrate the technical solutions of this application more clearly and are therefore provided as examples only, and should not be construed as limitations on the protection scope of this application.

Unless otherwise defined, all technical and scientific terms used herein have the same meanings as commonly understood by those skilled in the technical field of this application; the terms used herein are for the purpose of describing specific embodiments only and are not intended to limit this application; the terms "include" and "have" and any variations thereof in the specification, claims, and the above description of the drawings of this application are intended to cover non-exclusive inclusion.

In the description of the embodiments of this application, technical terms such as "first" and "second" are used only to distinguish between different objects and should not be understood as indication or implication of relative importance or implicit indication of the number, specific order, or primary-secondary relationship of the technical features indicated. In the description of the embodiments of this application, "a plurality of" means two or more, unless otherwise specifically defined.

Reference to an "embodiment" herein means that a particular feature, structure, or characteristic described with reference to the embodiment may be included in at least one embodiment of this application. The appearance of this phrase in various places in the specification does not necessarily refer to the same embodiment, nor is it a separate or alternative embodiment mutually exclusive with other embodiments. Those skilled in the art explicitly and implicitly understand that the embodiments described herein may be combined with other embodiments.

In the description of the embodiments of this application, the term "and/or" merely describes an associative relationship between associated objects, indicating that three relationships may exist, for example, A and/or B may indicate: A alone, both A and B, or B alone. Additionally, the character "/" herein generally indicates an "or" relationship between the associated objects.

In the description of the embodiments of this application, the term "a plurality of" refers to two or more (including two), similarly, "a plurality of groups" refers to two or more groups (including two groups), and "a plurality of pieces" refers to two or more pieces (including two pieces).

In the description of the embodiments of this application, technical terms such as "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," and "circumferential" indicate orientations or positional relationships based on the orientations or positional relationships shown in the drawings, and are only for the convenience of describing the embodiments of this application and simplifying the description, rather than indicating or implying that the referred apparatus or element must have a specific orientation or be constructed and operated in a specific orientation, and thus should not be construed as limitations on the embodiments of this application.

In the description of the embodiments of this application, unless otherwise explicitly specified and limited, technical terms such as "mount," "connect," "join," and "fix" should be understood in a broad sense, for example, it may be a fixed connection, a detachable connection, or an integral formation; it may be a mechanical connection, an electrical connection, or a direct connection or an indirect connection through an intermediary, or it may be the internal communication or interaction between two elements. Those of ordinary skill in the art can understand the specific meanings of the above terms in the embodiments of this application based on specific circumstances.

Currently, from the perspective of the development of market trends, the application of batteries is becoming increasingly widespread. Batteries can be used not only in energy storage systems such as hydroelectric, thermal, wind, and solar power plants but also extensively in electric vehicles such as electric bicycles, electric motorcycles, and electric cars, as well as in mobile communication devices, smart wearables, aerospace, and other fields. With the diversification of usage scenarios and the growing market demand, the requirements for the stability of battery charge and discharge and the energy density of battery cells are also increasing.

A battery may be formed by one or more battery cells. A battery cell generally includes a housing, an electrode assembly, and an electrode terminal, where the electrode assembly includes a main body that generates electrical energy and a tab electrically connected to the main body. The electrode terminal is typically disposed on the housing, connected to the main body through the tab to conduct electrical energy. The electrode terminal is disposed on the first wall of the housing, with the bottom surface of the electrode terminal facing the main body. Positioning the tab below the electrode terminal and attaching and welding the tab to the bottom surface of the electrode terminal can enhance connection strength between the tab and the electrode terminal, thereby improving the stability and efficiency of electrical energy transmission.

Furthermore, the side surface of the electrode terminal is connected to the bottom surface and extends along the main body toward the first wall. Positioning the tab on a side of the electrode terminal and connecting the tab to the side surface of the electrode terminal can ensure connection stability while a height space of the housing is not occupied, beneficial to improving the energy density of the battery cell.

Against the backdrop of increasing demand for battery energy density, in the battery cell of this application, a distance between the main body and the electrode terminal can be reduced, fully utilizing the internal space of the housing, improving the energy density of the battery cell.

The battery cell provided in the embodiments of this application can be used in electric apparatuses that use a battery as a power source or in various energy storage systems that use a battery as an energy storage element. The battery may be a traction battery used to provide driving power for new energy vehicles, electric bicycles, electric trains, and the like, or it may be an energy storage battery used as a storage battery for renewable energy sources such as solar power, wind power, or hydropower.

An electric device may include, but is not limited to, vehicles, mobile phones, portable devices, laptops, ships, spacecraft, electric toys, electric tools, and the like. Spacecraft may include airplanes, rockets, space shuttles, and spaceships; electric toys may include fixed or mobile electric toys, such as game consoles, electric car toys, electric ship toys, and electric airplane toys. Electric tools may include electric metal cutting tools, electric grinding tools, electric assembly tools, and electric railway tools, such as electric drills, electric grinders, electric wrenches, electric screwdrivers, electric hammers, impact drills, concrete vibrators, electric planers, and the like. The electric device is not specifically limited in the embodiments of this application.

For ease of describing the following embodiments, in an embodiment of this application, an example in which a vehicle 1000 is an electric device is used for description.

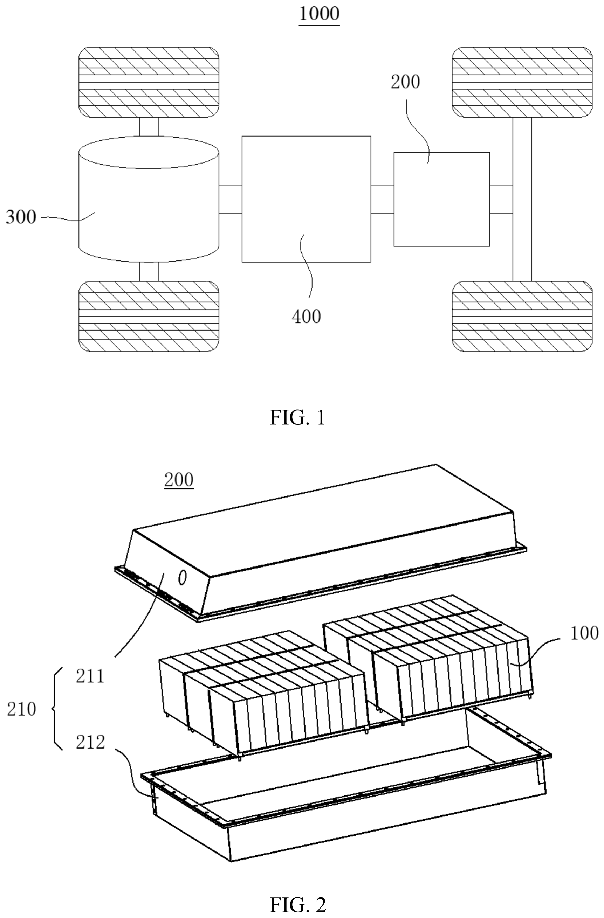

Referring to FIG. 1, FIG. 1 is a schematic structural diagram of a vehicle 1000 according to some embodiments of this application. The vehicle 1000 may be a fuel vehicle, a gas vehicle, or a new energy vehicle, where the new energy vehicle may be a battery electric vehicle, a hybrid vehicle, or an extended-range vehicle. A battery 200 is disposed inside the vehicle 1000, and the battery 200 may be disposed at the bottom, front, or rear of the vehicle 1000. The battery 200 may be used to power the vehicle 1000, for example, the battery 200 may serve as an operational power source for the vehicle 1000. The vehicle 1000 may further include a controller 400 and a motor 300, where the controller 400 is used to control the battery 200 to supply power to the motor 300, for example, for the operational power demands during starting, navigation, and driving of the vehicle 1000.

In some embodiments of this application, the battery 200 may not only serve as an operational power source of the vehicle 1000 but also as a driving power source of the vehicle 1000, completely or partially replacing fuel or natural gas to provide driving power for the vehicle 1000.

Referring to FIG. 2, FIG. 2 is an exploded view of a battery 200 according to some embodiments of this application. The battery 200 includes a box 210 and a battery cell 100, and the battery cell 100 accommodated within the box 210. The box 210 is used to provide an accommodation space for the battery cell 100, and the box 210 may be in various structures. In some embodiments, the box 210 may include a first portion 211 and a second portion 212, where the first portion 211 and the second portion 212 are engaged with each other, and the first portion 211 and the second portion 212 together define an accommodation space for accommodating the battery cell 100. The second portion 212 may be a hollow structure with one open end, and the first portion 211 may be a plate-like structure. The first portion 211 covers the open side of the second portion 212, so that the first portion 211 and the second portion 212 together define the accommodation space. Alternatively, both the first portion 211 and the second portion 212 may be hollow structures with one open side, with the open side of the first portion 211 covering the open side of the second portion 212. The box 210 formed by the first portion 211 and the second portion 212 may be in various shapes, such as a cylinder or a cuboid.

In the battery 200, there may be a plurality of battery cells 100, and the plurality of battery cells 100 may be connected in series, parallel, or series-parallel, where the series-parallel connection refers to a mix of series and parallel connections among the plurality of battery cells 100. The plurality of battery cells 100 may be directly connected in series, parallel, or a series-parallel, and an entirety formed by the plurality of battery cells 100 is accommodated within the box 210. Certainly, the battery 200 may alternatively be an entirety formed by a plurality of battery modules connected in series, parallel, or series-parallel and accommodated within the box 210, where the plurality of battery modules are formed by a plurality of battery cells 100 connected in series, parallel, or series-parallel. The battery 200 may further include other structures, for example, the battery 200 may include a busbar component for achieving electrical connections between the plurality of battery cells 100.

Each battery cell 100 may be a secondary battery or a primary battery; or may alternatively be a lithium-sulfur battery, a sodium-ion battery, or a magnesium-ion battery. However, the battery cell is not limited thereto. The battery cell 100 may be in a cylindrical, flat, cuboid, or another shape.

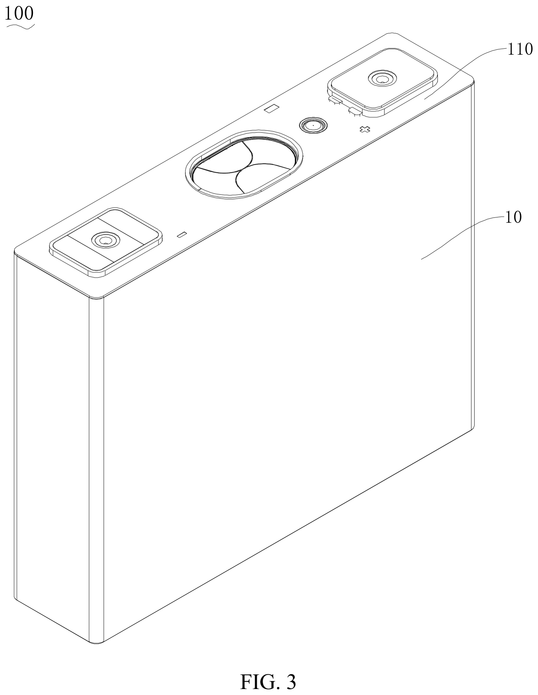

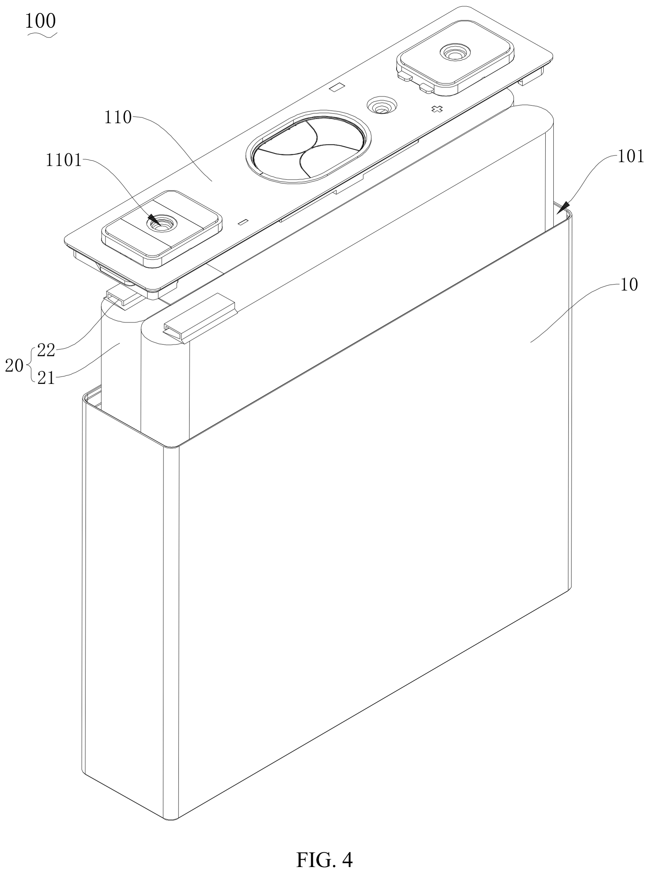

Referring to FIG. 3 and FIG. 4, FIG. 3 is a schematic structural diagram of a battery cell according to some embodiments of this application, and FIG. 4 is a schematic exploded view of the battery cell 100 shown in FIG. 3. As shown in FIG. 4, the battery cell 100 includes a housing 10 and an electrode assembly 20. The housing 10 is a component used to accommodate the electrode assembly 20, and the housing 10 may be a hollow structure with an opening formed at one end. A first wall 110 may cover the opening. The housing 10 may be in various shapes, such as a cylinder, a flat body, or a cuboid. The shape of the housing 10 may be the same as the shape of the battery cell 100. A material of the housing 10 may be a hard metal or alloy, such as copper, iron, aluminum, steel, aluminum alloy, or the like.

The battery cell 100 has a positive electrode and a negative electrode, and the electrode assembly 20 is the component in the battery cell 100 that undergoes electrochemical reactions to form the positive electrode and negative electrode of the battery cell 100. The electrode assembly 20 is accommodated within a hollow region inside the housing 10. The electrode assembly 20 may include a main body 21 and a tab 22, where the main body 21 may be a wound structure formed by winding a positive electrode plate, a separator, and a negative electrode plate, or a stacked structure formed by stacking a positive electrode plate, a separator, and a negative electrode plate. The electrode plates are typically manufactured with lithium ions and metals such as cobalt, nickel, manganese, or aluminum, and the electrode plates are used to intercalate or deintercalate ions in an electrolyte to generate electrical energy.

The tab 22 is a conductor that leads the positive electrode and negative electrode from the main body 21 to transmit electrical energy. The tab 22 may also serve as a contact point for charging and discharging the battery cell 100. The tab 22 may be a metal conductor separately welded to the electrode plate, and the tab 22 may be made of the same metal material as that of the electrode plate. For example, a negative electrode tab 22 is connected to a positive electrode plate and the negative electrode tab 22 uses a nickel (Ni) material. The tab 22 may alternatively be formed by directly cutting an edge of the electrode plate.

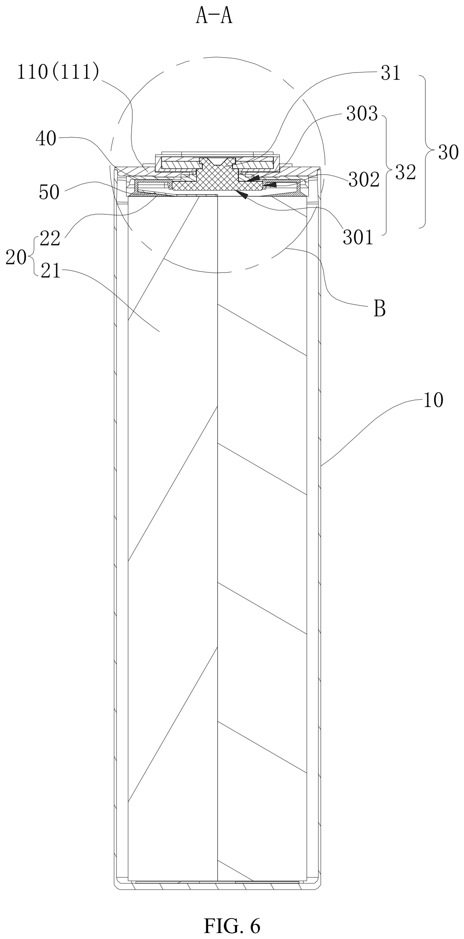

The housing 10 may encase the electrode assembly 20, and the first wall 110 may be a portion of the housing 10 covering one side surface 302 of the main body 21. As shown in FIG. 4 and FIG. 6, the first wall 110 may be disposed at a top of the main body 21, covering the opening at the top of the housing 10. The electrode terminal 30 is disposed on the first wall 110, located above the main body 21. In some embodiments, the first wall 110 may alternatively be disposed at the bottom of the main body 21, with the electrode terminal 30 located below the main body 21.

The electrode terminal 30 may be a conductor made of metal, and may be column-shaped or disc-shaped. A side of the electrode terminal 30 facing the main body 21 is a bottom surface 301, and the bottom surface 301 and the main body 21 are spaced apart by a certain distance. The side surface 302 of the electrode terminal 30 is connected to the bottom surface 301, and the side surface 302 may be substantially perpendicular to the bottom surface 301. A side of the electrode terminal 30 facing away from the main body 21 is connected to the first wall 110, securing the electrode terminal 30 to the first wall 110. The tab 22 leads the positive electrode and negative electrode of the main body 21 and connected to the side surface 302 of the electrode terminal 30, for example, the tab 22 may be fixedly connected to the side surface 302 of the electrode terminal 30 by welding. Through the tab 22 and the electrode terminal 30, the electrode plate can be connected to an external circuit of the battery cell 100. The positive electrode tab 22, the electrode terminal 30, the negative electrode tab 22, and the electrode terminal 30 may be separately disposed at two opposite ends of the first wall 110 to avoid short-circuiting of the electrode assembly 20.

In related technologies, one end of the tab is connected to the main body, and another end is connected to a bottom surface of the electrode terminal, resulting in a relatively large distance between the bottom surface of the electrode terminal and the main body, which is not conducive to improvement of the energy density of the battery cell.

In the battery cell 100 according to these embodiments of this application, the tab 22 is connected to the side surface 302 of the electrode terminal 30, a distance between the bottom surface 301 of the electrode terminal 30 and the main body 21 can be reduced, thereby increasing a height of the main body 21 without increasing an overall height of the battery cell 100, thus improving the energy density of the battery cell 100.

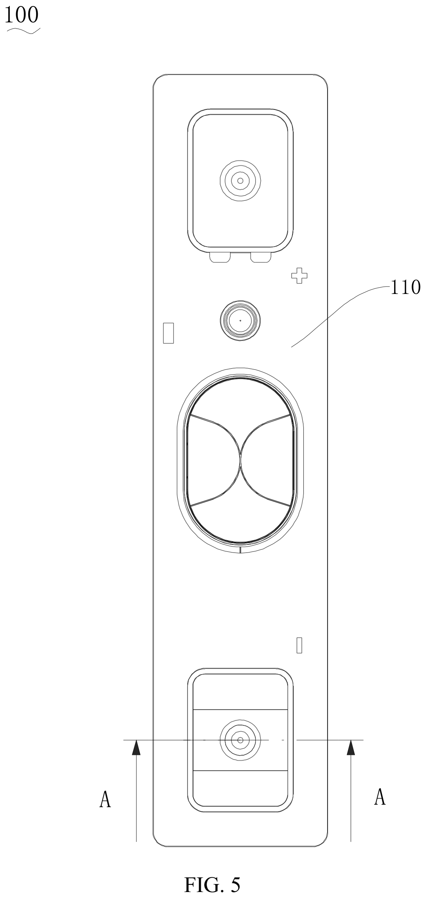

Referring to FIG. 4 to FIG. 6, in some embodiments, the first wall 110 includes a top cover 111.

Specifically, the top of the housing 10 has an opening 101, and the first wall 110 covers the opening 101 of the housing 10, and together with the housing 10 defines a sealed hollow region, isolating the electrode assembly 20 inside the battery cell 100 from the external environment of the battery cell 100. The top cover 111 may be a metal plate or a metal sheet in the first wall 110, and the top cover 111 may have a through-hole 1101. The electrode terminal 30 is mounted in the through-hole 1101. The electrical energy of the electrode assembly 20 is conducted from the sealed space to the outside through the electrode terminal 30 of the top cover 111. The electrode terminal 30 passes through the through-hole 1101 of the top cover 111 and may be fixed to the top cover 111 by means such as a circlip or riveting.

In an embodiment, the housing 10 is a flat cuboid, with a longitudinal length significantly greater than a lateral length. The top cover 111 extends longitudinally at the top of the housing 10 and is longitudinally provided with through-holes 1101 at two opposite ends. The battery cell 100 includes two electrode terminals 30, where the two electrode terminals 30 are a positive electrode terminal and a negative electrode terminal. The positive electrode terminal and the negative electrode terminal are respectively disposed in the through-holes 1101 at two ends of the top cover 111. Flake-shaped or strip-shaped ends may be obtained as tabs 22 through cutting the edges toward the top cover 111 of the electrode plates at the two opposite longitudinal ends of the battery cell 100.

The positive electrode plate and negative electrode plate may be cut to obtain two groups of positive electrode tabs 22 and two groups of negative electrode tabs 22 respectively. The two groups of tabs 22 of the same polarity are wound around two sides of an electrode terminal 30 at the same end and connected to two side surfaces 302, respectively. Referring to FIG. 6, FIG. 6 is a transverse cross-sectional diagram of the battery cell 100 according to some embodiments of this application, where two groups of tabs 22 of the same polarity may be distributed on two opposite lateral sides of the electrode terminal 30, and each of two opposite lateral side surfaces 302 of the electrode terminal 30 is connected to a group of tabs 22.

In this way, the top cover 111 can secure the electrode terminal 30 to the first wall 110, and the electrical energy of the electrode assembly 20 is conducted from inside the battery cell 100 to an external circuit of the battery cell 100 through the electrode terminal 30 on the top cover 111.

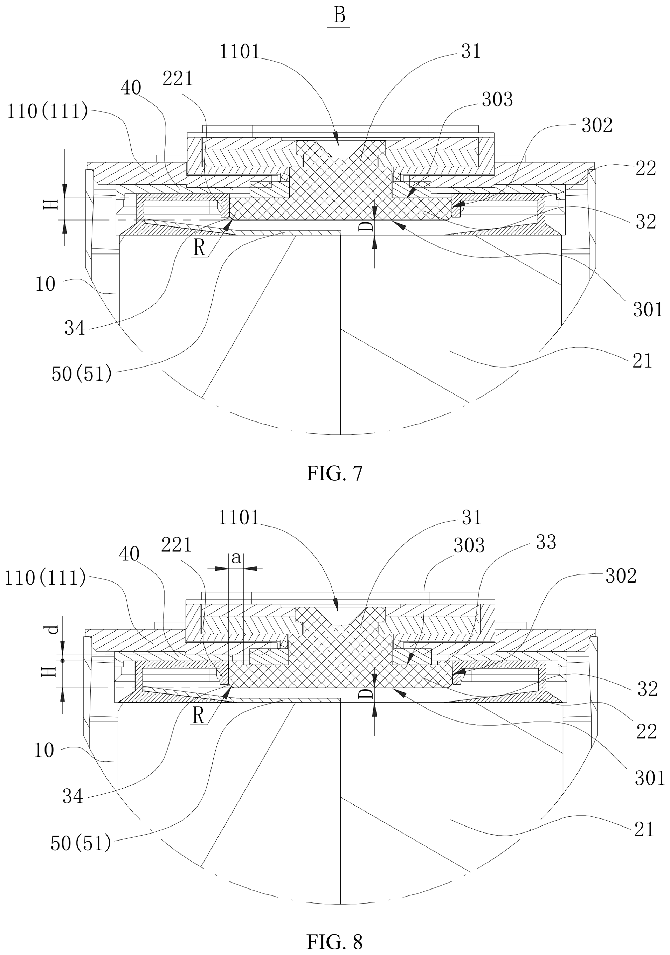

Referring to FIG. 7 to FIG. 9, in some embodiments, the electrode terminal 30 includes a mounting portion 31 and a connection portion 32 connected to the mounting portion 31. The mounting portion 31 is disposed on the first wall 110. The connection portion 32 is located within the housing 10. The connection portion 32 includes the bottom surface 301, the side surface 302, and a top surface 303 opposite the bottom surface 301, where an edge of the top surface 303 and/or the bottom surface 301 is provided with a protrusion 33, and the tab 22 is connected to the side surface 302 and the protrusion 33.

Specifically, the mounting portion 31 may be a portion of the electrode terminal 30 facing away from the main body 21 and connected to the first wall 110, and the mounting portion 31 may be fixedly connected to the first wall 110 by means such as snapping, circlip, or riveting. The electrode terminal 30 may be assembled in the through-hole 1101 of the top cover 111 along a vertical direction of the battery cell 100, and the connection portion 32 may be located below the mounting portion 31. The connection portion 32 may be located above the main body 21, with the bottom surface 301 facing the main body 21. An end surface of the connection portion 32 connected to the mounting portion 31 is opposite the bottom surface 301 and also faces away from the main body 21 and toward the first wall 110. A surface surrounding the connection portion 32 circumferentially at the bottom of the electrode terminal 30 is the side surface 302, and the side surface 302 may extend along the vertical direction of the battery cell 100, connecting upward to the top surface 303 and downward to the bottom surface 301.

In some embodiments, as shown in FIG. 7, a vertical cross-section of the electrode terminal 30 is T-shaped, with a cross-section surface of the connection portion 32 facing the main body 21 having a larger area and a cross-section surface of the mounting portion 31 connected to the first wall 110 having a smaller area. An area of the end surface of the connection portion 32 connected to the mounting portion 31 is larger than an area of the end surface of the mounting portion 31 connected to the connection portion 32, and a part of the end surface of the connection portion 32 connected to the mounting portion 31 that exceeds the end surface of the mounting portion 31 connected to the connection portion 32 may be the top surface 303. The top surface 303 faces the first wall 110, and the top surface 303 may face the top cover 111 and be spaced from the top cover 111 by a certain distance.

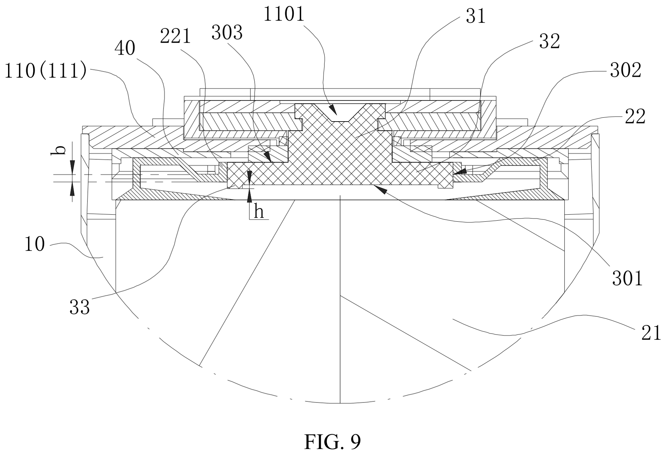

As shown in FIG. 8, the protrusion 33 may be formed by protruding from the edge of the top surface 303 toward the first wall 110 by a certain height. As shown in FIG. 9, the protrusion 33 may alternatively be formed by protruding from the edge of the bottom surface 301 toward the main body 21 by a certain height. The edges of the top surface 303 and the bottom surface 301 may be connected to form the side surface 302. The side surface 302 may continue to extend toward the first wall 110 and/or the main body 21 to form a side edge of the protrusion 33. A connection surface between the tab 22 and the side surface 302 may cover the side edge of the protrusion 33, so that the tab 22 is connected to the connection portion 32 through the side surface 302 and the protrusion 33.

In this way, connecting the tab 22 to the side surface 302 and the protrusion 33 can increase a connection area between the tab 22 and the electrode terminal 30, thereby improving the stability of the connection between the tab 22 and the electrode terminal 30.

Referring to FIG. 8, in some embodiments, the protrusion 33 is provided on the top surface 303, and the protrusion 33 is spaced from a surface of the first wall 110 facing the main body 21.

Specifically, the top cover 111 of the first wall 110 faces the main body 21 and is opposite the top surface 303. The protrusion 33 may be located at the edge of the top surface 303, or in other words, the projection is located at a position where the top surface 303 connects to the side surface 302. The protrusion 33 may be a projection protruding from the top surface 303 toward the top cover 111, with the side edge of the protrusion 33 connected to the side surface 302. The direction in which the side edge of the protrusion 33 extends toward the top cover 111 may be the same as the direction in which the side surface 302 extends from the main body 21 toward the first wall 110, so that the side edge of the protrusion 33 and the side surface 302 form a continuous surface. The protrusion 33 is located between the top surface 303 and the first wall 110, with a lower end connected to the top surface 303 and an upper end facing the top cover 111 and the upper end of the protrusion 33 spaced from the top cover 111 by a certain distance.

For ease of description, in this application, the distance between the upper end of the protrusion 33 and the top cover 111 is denoted as d. In this embodiment, the distance between the protrusion 33 and the surface of the first wall 110 facing the main body 21 is the distance d between the upper end of the protrusion 33 and the top cover 111.

In this way, the protrusion 33 extending in the direction away from the main body 21 does not occupy a height space of the main body 21, improving the space utilization within the housing 10, thereby increasing the energy density of the battery cell 100.

It should be noted that in this application, for ease of explanation, the mounting portion 31, the connection portion 32, and the protrusion 33 are distinguished in the electrode terminal 30, and this does not impose a limitation that the electrode terminal 30 is a split or integral structure. Preferably, the electrode terminal 30 is an integral structure, with the mounting portion 31, the connection portion 32, and the protrusion 33 being different components of the electrode terminal 30 with different connection relationships to other elements.

In some embodiments, the tab 22 and the protrusion 33 may be connected by welding, and a thickness a of the protrusion 33 is greater than 0.2 mm (a > 0.2 mm). The thickness a of the protrusion 33 may be a distance between the two side edges of the protrusion 33 along a direction from the tab 22 toward the side surface 302. It can be understood that during welding, localized melting occurs at the tab 22 and the protrusion 33, and the thickness a of the protrusion 33 being greater than 0.2 mm can ensure welding strength between the tab 22 and the protrusion 33, stabilizing the connection between the tab 22 and the protrusion 33.

Referring to FIG. 9, in some embodiments, the distance d between the protrusion 33 and the surface of the first wall 110 facing the main body 21 is greater than 0.05 mm and less than or equal to 2 mm, that is, 0.05 mm < d ≤ 2 mm.

Specifically, the protrusion 33 may be a projection protruding from the top surface 303 toward the top cover 111, with the lower end of the protrusion 33 connected to the top surface 303, and the upper end of the protrusion 33 facing the top cover 111, forming an end surface substantially parallel to the top surface 303. The distance d between the protrusion 33 and the surface of the first wall 110 facing the main body 21 may be the distance between the upper end surface of the protrusion 33 and the surface of the top cover 111 facing the top surface 303.

For example, the distance d between the protrusion 33 and the surface of the first wall 110 facing the main body 21 may be 0.06 mm, 0.07 mm, 0.08 mm, 0.09 mm, 0.10 mm, 0.12 mm, 0.15 mm, 0.16 mm, or 2 mm.

In this way, the distance d between the protrusion 33 and the surface of the first wall 110 facing the main body 21 being greater than 0.05 mm can ensure insulation strength between the electrode terminal 30 and the top cover 111, and the distance d between the protrusion 33 and the c surface of the first wall 110 facing the main body 21 being less than or equal to 2 mm can reduce the occupation of the internal space of the housing 10, helping to improve the energy density of the battery cell 100.

Referring again to FIG. 7, in some embodiments, the battery cell 100 includes an insulating member 40 disposed between the protrusion 33 and the first wall 110.

Specifically, the insulating member 40 may be sandwiched between the top cover 111 and the protrusion 33. A side of the insulating member 40 facing the protrusion 33 may abut against the protrusion 33, covering the end surface of the protrusion 33 facing the first wall 110, and a side of the insulating member 40 facing the first wall 110 may abut against the top cover 111, covering the surface of the side of the top cover 111 facing the protrusion 33. A shape of the insulating member 40 may match the top cover 111 and the protrusion 33, and a stepped surface, a groove, or a protrusion may form on an outer surface of the insulating member 40, or a through-hole may be provided, to facilitate assembly with the top cover 111.

In some embodiments, the insulating member 40 may be sheet-like or plate-like, and the insulating member 40 may be made of materials with good insulation and chemical stability, such as polypropylene (PP) plastic or polycarbonate (PC) plastic.

In this way, the insulation strength between the protrusion 33 and the first wall 110 can be enhanced, thereby improving the insulation and isolation provided by the housing 10 for the electrode assembly 20.

In some embodiments, the tab 22 is partially attached to the insulating member 40.

Specifically, the insulating member 40 may extend radially along the electrode terminal 30 from the protrusion 33 toward an outer side of the electrode terminal 30. For one side of the insulating member 40 facing the protrusion 33, a portion of a surface is attached to the end surface of the protrusion 33 facing the first wall 110, while another portion of the surface may be attached to the tab 22. The tab 22 may be bent on the outer side of the electrode terminal 30, with the end of the tab 22 away from the main body 21, namely, a free end 221, attached to the side surface 302 of the electrode terminal 30. A portion of the tab 22 connected to the free end 221 may be bent toward the first wall 110, so that a portion of the tab 22 between the free end 221 and an end connected to the main body 21 may be attached to the insulating member 40. A surface of the insulating member 40 attached to the tab 22 faces the main body 21, and an edge near the electrode terminal 30 of the surface of the insulating member 40 attached to the tab 22 may be attached to the end surface of the protrusion 33 facing the first wall 110.

In this way, the tab 22 being partially attached to the insulating member 40 results in a large contact area between the tab 22 and the insulating member 40, facilitating dispersion of internal stress in the tab 22, thereby reducing a possibility that the tab 22 cracks due to localized stress concentration.

In some embodiments, the surface of the insulating member 40 attached to the tab 22 is planar.

Specifically, the surface of the side of the insulating member 40 facing the protrusion 33 may be flat or form a surface with a plurality of flat steps. The surface of the tab 22 attached to the insulating member 40 may also be flat. The surface of the insulating member 40 attached to the tab 22 is planar, with the attached surface being continuous, flat, free of protrusions, grooves, or the like, and relatively smooth. The surface of the insulating member 40 attached to the tab 22 may be inclined relative to the top surface 303 of the electrode terminal 30 or may be substantially parallel to the top surface 303 of the electrode terminal 30.

It can be understood that the tab 22 being attached to the insulating member 40 allows the insulating member 40 to share the stress on the tab 22, and the contact surface between the insulating member 40 and the tab 22 being planar facilitates uniform stress distribution.

In this way, the contact surface where the tab 22 is attached to the insulating member 40 is planar, further reducing the possibility that the tab 22 cracks due to localized stress.

Referring to FIG. 7, in some embodiments, the protrusion 33 is provided on the bottom surface 301, and along a direction from the top surface 303 toward the bottom surface 301, a height h of the protrusion 33 is less than a thickness b of the tab 22.

Specifically, the protrusion 33 is provided on the bottom surface 301, protruding toward the main body 21, and a distance between the top end of the protrusion 33 and the bottom surface 301 is smaller than a distance between the bottom surface 301 and the main body 21. Along the direction from the first wall 110 toward the main body 21, a distance by which the protrusion 33 extends beyond the bottom surface 301 is a height h of the protrusion 33. The protrusion 33 is located in a space between the bottom surface 301 and the main body 21, and the height h of the protrusion 33 is less than the thickness b of the tab 22. In related technologies, the tab extends into the space between the bottom surface and the main body, connected to the bottom surface, occupying a relatively large space between the bottom surface and the main body.

In this way, since the height h of the protrusion 33 is less than the thickness b of the tab 22, when the protrusion 33 is disposed between the electrode terminal 30 and the main body 21, the protrusion 33 occupies a space smaller than a space occupied by the tab 22 connected to the bottom surface 301, thereby improving the utilization of the internal space of the housing 10.

Referring again to FIG. 8 and FIG. 9, in some embodiments, the tab 22 includes the free end 221 away from the main body 21, the free end 221 is connected to the side surface 302, and an end surface of the free end 221 faces the main body 21 or the first wall 110.

Specifically, the end surface of the free end 221 may be planar or curved, and may be flat or form a pointed end, protrusion, or depression. An area of the end surface of the free end 221 is relatively smaller than an area of a surface of the free end 221 connected to the side surface 302.

In some embodiments, as shown in FIG. 8, the end surface of the free end 221 faces the first wall 110, the free end 221 is attached to the side surface 302, and the portion of the tab 22 connected to the free end 221 extends from the side surface 302 and the bottom surface 301 toward the insulating member 40 and is attached to the insulating member 40. For the insulating member 40, a bend is formed between the portion of the tab 22 extending toward the insulating member 40 and the free end 221, and another bend is formed at the position where the tab 22 extending toward the insulating member 40 is attached to the insulating member 40. The tab 22 may be bent again at an edge of the insulating member 40 away from the electrode terminal 30, extending toward the main body 21 and connected to the main body 21.

In some embodiments, as shown in FIG. 9, the end surface of the free end 221 faces the main body 21, the free end 221 is attached to the side surface 302, and the tab 22 may extend from the side surface 302 and the edge of the top surface 303 along the surface of the insulating member 40 and be attached to the insulating member 40. The tab 22 is bent at the position where the side surface 302 or the protrusion 33 abuts the insulating member 40. The tab 22 may be bent again at the edge of the insulating member 40 away from the electrode terminal 30, extending toward the main body 21 and connected to the main body 21. It can be understood that, compared with the embodiment where the end surface of the free end 221 faces the first wall 110, this embodiment allows for fewer bends or less tight winding of the tab 22, resulting in a relatively shorter tab 22.

In this way, a free end 221 of the tab 22 away from the main body 21 is connected to the electrode terminal 30, and another end is connected to the main body 21, allowing the tab 22 to move freely to a certain degree between the two ends, thereby reducing pulling and lowering the possibility that the tab 22 cracks due to stress.

Referring to FIG. 7, in some embodiments, the end surface of the free end 221 faces the main body 21, and an insulating structure 50 is disposed between the main body 21 and the end surface of the free end 221.

As described above, the end surface of the free end 221 faces the main body 21, minimizing the length of the tab 22. When the end surface of the free end 221 faces the main body 21, the end surface of the free end 221 is spaced from the main body 21 by a certain distance. The insulating structure 50 may be inserted between the end surface of the free end 221 and the main body 21 to further prevent contact between the free end 221 and the main body 21.

Specifically, the insulating structure 50 may cover the end surface of the free end 221 or may cover a portion of the surface of the main body 21 facing the free end 221. A shape of the insulating structure 50 may match a shape of the tab 22 or the main body 21. The insulating structure 50 may be made of a less rigid insulating material, for example, plastics such as PET (polyethylene terephthalate) or polyimide to form the insulating structure 50. The insulating structure 50 may include, but is not limited to, an insulating plate, an insulating gasket, an insulating film 51, or an insulating tape.

In this way, the insulating structure 50 can prevent the free end 221 of the tab 22 from inserting into the main body 21, which causes short circuit in the electrode assembly 20.

In some embodiments, the insulating structure 50 includes an insulating film 51 attached to the main body 21 and the tab 22.

Specifically, the insulating film 51 may be a PET film, a polyimide film, or the like. The insulating film 51 may be disposed on the surface of the main body 21 facing the first wall 110 and on the surface of the end of the tab 22 connected to the main body 21. The insulating film 51 is attached to the surfaces of the main body 21 and the tab 22. The insulating film 51 may be attached to the surfaces of the main body 21 and the tab 22. The insulating film 51 has a small thickness and is light, and may be directly attached to the main body 21 and the tab 22 and unfold on the surfaces of the main body 21 and the tab 22 in some embodiments.

In this way, the insulating film 51 can adapt to tabs 22 and main bodies 21 of different shapes, providing effective insulation protection. In addition, the use of the lightweight insulating film 51 helps to improve the energy density of the battery cell 100.

Referring to FIG. 8 and FIG. 9, in some embodiments, the tab 22 includes the free end 221 away from the main body 21, the free end 221 is connected to the side surface 302, and the free end 221 is located on the side of the bottom surface 301 away from the main body 21.

Specifically, the direction from the top surface 303 toward the bottom surface 301 is defined as a direction from the top to the bottom, and the free end 221 is located above the plane where the bottom surface 301 is located. The free end 221 is farther from the main body 21 relative to the bottom surface 301. For example, the end surface of the free end 221 faces the main body 21, a distance between the end surface of the free end 221 and the main body 21 is greater than a distance between the bottom surface 301 and the main body 21, the free end 221 extends upward along the side surface 302 from the end surface, and the distance between the free end 221 and the main body 21 stays less than the distance between the bottom surface 301 and the main body 21. For another example, the end surface of the free end 221 faces the first wall 110; the free end 221 extends downward along the side surface 302 from the end surface, bends at a position not exceeding the bottom surface 301, and continues to extend in a direction away from the main body 21; and a distance between any position on the free end 221 and the main body 21 is less than the distance between the bottom surface 301 and the main body 21.

In this way, scratching of the tab 22 by a corner formed by the bottom surface 301 and the side surface 302 can be reduced, while also facilitating insulation protection between the free end 221 and the main body 21.

Referring to FIG. 7, in some embodiments, a corner of the electrode terminal 30 close to the main body 21 is formed with a passivation structure 34.

Specifically, the corner of the electrode terminal 30 close to the main body 21 is formed where the bottom surface 301 meets the side surface 302. The passivation structure 34 may be a fillet or chamfer formed between the bottom surface 301 and the side surface 302. The tab 22 is attached to the side surface 302, and the free end 221 may extend from a junction where the side surface 302 and the bottom surface 301 meet to a junction where the side surface 302 and the top surface 303 meet. The corner of the electrode terminal 30 close to the main body 21 contacts the tab 22, and the passivation structure 34, compared with a sharp corner, is less likely to cause damage to the tab 22 due to impact or scratching. A size of the chamfer or a diameter R of the fillet may range from 0.1 mm to 1 mm, that is, 0.1 mm ≤ R ≤ 1 mm. For example, R may be 0.1 mm, 0.2 mm, 0.5 mm, 0.65 mm, 0.9 mm, or 1 mm.

In some embodiments, a protective member (not shown) may be disposed between the electrode terminal 30 and the tab 22, the protective member may have insulating properties, and may be attached to the corner of the electrode terminal 30 close to the main body 21 to protect the tab 22.

In this way, the passivation structure 34 formed at the corner of the electrode terminal 30 close to the main body 21 can prevent the corner of the electrode terminal 30 from scratching the tab 22, reducing the possibility that the tab 22 cracks due to scratches.

Referring to FIG. 7 and FIG. 8, in some embodiments, along a direction from the main body 21 toward the first wall 110, a height H of the side surface 302 ranges from 0.5 mm to 10 mm, that is, 0.5 mm ≤ H ≤ 10 mm.

Specifically, the side surface 302 may extend along the direction from the main body 21 toward the first wall 110, and the free end 221 of the tab 22 is connected to the side surface 302 and may extend along the side surface 302 in the direction from the main body 21 toward the first wall 110. Therefore, the height H of the side surface 302 is positively correlated with an area of the connection surface between the side surface 302 and the tab 22. A larger height H of the side surface 302 means a larger area of the connection surface between the side surface 302 and the tab 22. Meanwhile, the height H of the side surface 302 is limited by a size of the space between the main body 21 and the first wall 110. When the height H of the side surface 302 does not exceed 10 mm, the internal space of the housing 10 can be effectively utilized.

In some embodiments, as shown in FIG. 8, the protrusion 33 is provided at the position where the side surface 302 meets the bottom surface 301 or the side surface 302 meets the top surface 303, with the edge of the protrusion 33 extending in the same direction as the side surface 302. In these embodiments, the height H of the side surface 302 includes the height of the protrusion 33 and a height h of the side surface 302.

For example, the height H of the side surface 302 may range from 0.5 mm to 10 mm, 0.6 mm to 1 mm, 1 mm to 2 mm, 2 mm to 4 mm, 4 mm to 5.5 mm, 6 mm to 9 mm, or the like. Alternatively, the height of the side surface 302 may be 0.55 mm, 0.7 mm, 0.9 mm, 1.2 mm, 1.4 mm, 2 mm, 3 mm, 5 mm, 7 mm, 8.1 mm, 10 mm, or the like.

In this way, reasonably setting the height H of the side surface 302 can increase the area of the connection surface between the side surface 302 and the tab 22, thereby ensuring a stable connection between the tab 22 and the side surface 302.

Referring to FIG. 7, in some embodiments, a distance D between the bottom surface 301 and the main body 21 is greater than 0.1 mm and less than or equal to 10 mm, that is, 0.1 mm < D ≤ 10 mm.

Specifically, the bottom surface 301 faces the main body 21, and the bottom surface 301 may be arranged parallel to the surface of the main body 21 facing the first wall 110. Along the direction from the main body 21 toward the first wall 110, the distance D between the bottom surface 301 and the main body 21 is greater than 0.1 mm, forming a gap with a width greater than 0.1 mm between the bottom surface 301 and the main body 21. Meanwhile, due to the limitation of the internal space of the housing 10, the distance D between the bottom surface 301 and the main body 21 is less than or equal to 10 mm.

For example, the distance D between the bottom surface 301 and the main body 21 may range from 0.1 mm to 10 mm, 0.2 mm to 8 mm, 0.3 mm to 7.5 mm, 0.4 mm to 6 mm, 0.5 mm to 5 mm, 0.6 mm to 4 mm, 0.9 mm to 3 mm, 1 mm to 2 mm, or the like. Alternatively, the distance D between the bottom surface 301 and the main body 21 may be 0.12 mm, 0.3 mm, 0.4 mm, 0.55 mm, 0.7 mm, 0.9 mm, 1.2 mm, 1.4 mm, 2 mm, 3 mm, 5 mm, 7 mm, 8 mm, 10 mm, or the like.

In this way, the distance between the bottom surface 301 and the main body 21 is greater than 0.1 mm, reducing a possibility that the bottom of the electrode terminal 30 damages the electrode assembly 20 during vibration or impact, thereby preventing decarbonization or lithium precipitation in the electrode assembly 20. In addition, setting the distance between the bottom surface 301 and the main body 21 to be less than or equal to 10 mm can effectively utilize the internal space of the housing 10.

Referring again to FIG. 2, the battery 200 provided in some embodiments of this application includes the battery cell 100 described above.

The battery 200 may be formed by one or more battery cells 100. When the battery 200 includes a plurality of battery cells 100, the plurality of battery cells 100 may be connected in series, parallel, or series-parallel, where the series-parallel connection refers to a mix of series and parallel connections among the plurality of battery cells 100. The battery 200 may alternatively be an entirety formed by a plurality of battery modules connected in series, parallel, or series-parallel, where the battery modules are formed by a plurality of battery cells 100 connected in series, parallel, or series-parallel. Alternatively, all the battery cells 100 are directly connected in series, parallel, or series-parallel, and all the battery cells 100 form an entire battery 200. The battery 200 may be a lithium-ion battery, a sodium-ion battery, a magnesium-ion battery, or the like.

In the battery 200 provided in the embodiments of this application, the connection structure between the electrode terminal 30 and the tab 22 is optimized in the battery cell 100, increasing the energy density of the battery cell 100 and the battery 200.

The electric device provided in some embodiments of this application includes the battery cell 100 or the battery 200 described above. The electric device in some embodiments of this application is a vehicle 1000. The battery 200 may serve as the operational power source for the vehicle 1000, disposed at the front of the vehicle 1000; or may serve as the driving power source for the vehicle 1000, disposed at the bottom of the vehicle 1000; or may serve as an energy storage element for the vehicle 1000, disposed at the rear of the vehicle 1000.

The battery 200 or the battery cell 100 provided in the embodiments of this application has a relatively high energy density, allowing the vehicle 1000 to save mounting space for the battery 200 while obtaining greater electrical energy. Additionally, the optimized electrical energy transmission structure in the battery cell 100 facilitates stable electrical energy transmission between the battery 200 and the vehicle 1000.

Finally, it should be noted that the above embodiments are only used to illustrate the technical solutions of this application and are not intended to limit the technical solutions. Although this application is described in detail with reference to the foregoing embodiments, those of ordinary skill in the art should understand that they can still modify the technical solutions described in the foregoing embodiments or make equivalent substitutions for some or all of the technical features, such modifications or substitutions do not cause the essence of the corresponding technical solutions to depart from the scope of the technical solutions of the embodiments of this application, and they should be included within the scope of the claims and specification of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A battery cell, **characterized by** comprising:
a housing, wherein the housing comprises a first wall;
an electrode assembly, wherein the electrode assembly is disposed in the housing, and the electrode assembly comprises a main body and a tab connected to the main body; and
an electrode terminal, wherein the electrode terminal is disposed on the first wall, the electrode terminal comprises a bottom surface and a side surface connected to the bottom surface, the bottom surface faces the main body, and the side surface is connected to the tab.

2. The battery cell according to claim 1, **characterized in that** the first wall comprises a top cover.

3. The battery cell according to claim 1 or 2, **characterized in that** the electrode terminal comprises a mounting portion and a connection portion connected to the mounting portion, the mounting portion is disposed on the first wall, the connection portion is located within the housing, the connection portion comprises the bottom surface, the side surface, and a top surface opposite the bottom surface, an edge of the top surface and/or the bottom surface is provided with a protrusion, and the tab is connected to the side surface and the protrusion.

4. The battery cell according to claim 3, **characterized in that** the protrusion is provided on the top surface, and the protrusion is spaced apart from a surface of the first wall facing the main body.

5. The battery cell according to claim 4, **characterized in that** a distance between the protrusion and the surface of the first wall facing the main body is greater than 0.05 mm and less than or equal to 2 mm.

6. The battery cell according to claim 4 or 5, **characterized in that** the battery cell comprises an insulating member disposed between the protrusion and the first wall.

7. The battery cell according to claim 6, **characterized in that** the tab is partially attached to the insulating member.

8. The battery cell according to claim 7, **characterized in that** a surface of the insulating member attached to the tab is planar.

9. The battery cell according to any one of claims 3 to 8, **characterized in that** the protrusion is provided on the bottom surface, and along a direction from the top surface toward the bottom surface, a height of the protrusion is less than a thickness of the tab.

10. The battery cell according to any one of claims 1 to 9, **characterized in that** the tab comprises a free end away from the main body, the free end is connected to the side surface, and an end surface of the free end faces the main body or the first wall.

11. The battery cell according to claim 10, **characterized in that** the end surface of the free end faces the main body, and an insulating structure is disposed between the main body and the end surface of the free end.

12. The battery cell according to claim 11, **characterized in that** the insulating structure comprises an insulating film attached to the main body and the tab.

13. The battery cell according to any one of claims 1 to 12, **characterized in that** the tab comprises the free end away from the main body, the free end is connected to the side surface, and the free end is located on a side of the bottom surface away from the main body.

14. The battery cell according to any one of claims 1 to 13, **characterized in that** a corner of the electrode terminal close to the main body is formed with a passivation structure.

15. The battery cell according to any one of claims 1 to 14, **characterized in that** along a direction from the main body toward the first wall, a height of the side surface ranges from 0.5 mm to 10 mm.

16. The battery cell according to any one of claims 1 to 15, **characterized in that** a distance between the bottom surface and the main body is greater than 0.1 mm and less than or equal to 10 mm.

17. A battery, **characterized by** comprising the battery cell according to any one of claims 1 to 16.

18. An electric device, **characterized by** comprising the battery cell according to any one of claims 1 to 16 or the battery according to claim 17.
